# EUROPEAN PATENT SPECIFICATION

(11) **EP 2 863 705 B1**
(45) Date of publication and mention of the grant of the patent: **05.04.2017**
(21) Application number: 14183291.5
(22) Date of filing: 02.09.2014
(51) Int. Cl.: H04W 88/10, H04W 52/02, H04W 4/00, H04W 76/02, H04W 72/04, H04W 8/00

(54) **Method, device and computer-readable recording medium for operating a device as an access point**
Verfahren, Vorrichtung und computerlesbares Speichermedium zum Betrieb eines Geräts als Zugangspunkt
Procédé, dispositif et support d'enregistrement lisible par ordinateur pour faire fonctionner un dispositif comme point d'accès

(30) Priority: 16.10.2013 KR 20130123600
(43) Date of publication of application: 22.04.2015
(73) Proprietor: Samsung Electronics Co., Ltd, Gyeonggi-do 443-742 (KR)
(72) Inventor: Kang, Hyuk, Gyeonggi-do (KR); Jung, Bu-seop, Gyeonggi-do (KR)
(74) Representative: HGF Limited

(56) References cited:
- EP-A1- 2 273 828
- EP-A1- 2 615 869
- US-A1- 2005 186 906
- US-A1- 2009 323 569
- YUVRAJ AGARWAL ET AL: "On Demand Paging Using Bluetooth Radios on 802.11 Based networks", INTERNET CITATION, 1 July 2003 (2003-07-01), pages 1-19, XP002555283, Retrieved from the Internet: URL:http://eprints.kfupm.edu.sa/54180/1/54 180.pdf [retrieved on 2009-11-13]

## Description

### CROSS-REFERENCE TO RELATED APPLICATION(S)

This application claims the benefit of a Korean patent application filed on October 16, 2013 in the Korean Intellectual Property Office and assigned Serial number 10-2013-0123600.

### TECHNICAL FIELD

The present disclosure relates to a method for making a device operate as a low-power Access Point (AP), a method for transmitting data from a device to an external device, and a device that operates as the AP.

### BACKGROUND

The term 'hotspot' indicates a site that provides Internet access for a wireless local area network by using a router connected to a link with regard to an Internet service provider. In general, the hotspot is formed of at least one Access Point (AP) installed on ceilings, walls, or other strategic points of public places in order to maximize a range of wireless access in a certain area.

Also, a mobile hotspot is configured to support efficient network mobility, and has a structure in which a Wireless Wide Area Network (WWAN) and a Wireless Local Area Network (WLAN) are combined. For example, a mobile terminal functions as a Wi-Fi hotspot, and shares Internet with various other Wi-Fi terminals. As the number of mobile terminals possessed by users increases, use of the mobile hotspot using the Wi-Fi increases as well.

However, when the mobile hotspot operates, a standby current of a Wi-Fi chipset or a Bluetooth chipset is considerably large, and current consumed to broadcast a beacon at a predetermined cycle (for example, 100 ms) is not small.

US patent application, US2009/323569, concerns the use of two different communication technologies to link a pair of "stations": "conventional" Bluetooth as a first link and WiFi as a second link. One of the stations may be an access point to an external network. Rather than have both technologies operational constantly, the Bluetooth link is used to provide a beacon-like function and thereafter to act as a control interface while the WiFi link is used, when required, to provide a data interface. The signaling on the Bluetooth link includes information needed for establishment of the WiFi link.

European patent application, EP2615869, also concerns the provision of more than one communication technology to link two electronic devices: here BLE and WiFi technologies are described. The BLE link is used first to broadcast advertisement packets and, once responded to, to carry further information needed for the establishment of the WiFi link.

The above information is presented as background information only to assist with an understanding of the present disclosure. No determination has been made, and no assertion is made, as to whether any of the above might be applicable as prior art with regard to the present disclosure.

### SUMMARY

It is an object of the invention to provide a method of operating a device as an access point according to independent claim 1.

The first communication method may include a Bluetooth Low Energy (BLE) communication method, and the second communication method may include at least one of a Wi-Fi communication method and a Bluetooth communication method.

The operating of the device as the AP by using the second communication link may include receiving a request for transmitting certain data from the other device via the second communication link, receiving the certain data via an external network connected to the device, and transmitting the received certain data to the other device via the second communication link.

The request with regard to the operating of the AP may include a sleep-mode request for changing an operation mode of a communication module supporting the second communication method or an awake-mode request for changing the operation mode of the communication module supporting the second communication method.

The method that makes the device operate as the AP may further include setting an operation mode of a communication module supporting the second communication method as a sleep mode, and terminating a connection of the second communication link when a request for transmitting data is not transmitted by the other device for a predetermined time, and maintaining a connection of the first communication link.

The receiving the request with regard to the operation of the AP from the other device may include receiving a sleep-mode request from the other device via the first communication link, setting an operation mode of a communication module supporting the second communication method as a sleep mode based on the sleep-mode request, and terminating a connection of the second communication link, and maintaining a connection of the first communication link.

The method that makes the device operate as the AP may further include receiving an awake-mode request from the other device via the first communication link, and changing the operation mode of the communication module supporting the second communication method from the sleep mode to an awake mode based on the awake-mode request, and reestablishing the second communication link.

The method that makes the device operate as the AP may further include detecting an occurrence of an event that the connection of the first communication link is terminated, and changing the operation mode of the communication module supporting the second communication method from the sleep mode to an awake mode based on the event, and reestablishing the second communication link.

The detecting of the occurrence of the event that the connection of the first communication link is terminated may include detecting that the other device exceeds a communication coverage of the first communication method.

The method that makes the device operate as the AP may further include changing the operation mode of the communication module supporting the second communication method from the awake mode to the sleep mode, and terminating the connection of the second communication link as the first communication link whose connection is terminated is reestablished.

The method that makes the device operate as the AP may further include receiving setting information on a transmission of a push message from the other device and determining whether to transmit the push message to the other device based on the setting information when an operation mode of a communication module supporting the second communication method is set as a sleep mode.

In accordance with another aspect of the present disclosure, a device that operates as an AP according to independent claim 12 is provided. The device includes a first communication module for using a first communication method in order to broadcast a packet including communication connecting information with regard to a second communication method, receiving a connection request with regard to a first communication link from another device receiving the packet, and establishing the first communication link using the first communication method, a second communication module for receiving a connection request with regard to the second communication method from the other device, and establishing a second communication link using the second communication method, and a control unit for controlling the first communication module to ensure the first communication module operate as the AP by using the second communication link, and receives the request with regard to the operation of the AP from the other device via the first communication link.

The control unit may receive the request for receiving certain data from the other device via the second communication link, may receive the certain data from an external network connected to the device, and may transmit the received certain data to the other device via the second communication link.

The control unit may set an operation mode of the second communication module supporting the second communication method as a sleep mode when a request for transmitting data is not transmitted by the other device for a predetermined time, may terminate a connection of the second communication link, and may maintain a connection of the first communication link.

The control unit may set an operation mode of the second communication module supporting the second communication method as a sleep mode based on a sleep-mode request transmitted by the other device via the first communication link, may terminate a connection of the second communication link, and may maintain a connection of the first communication link.

The control unit may change the operation mode of the second communication module supporting the second communication method from the sleep mode to an awake mode based on an awake-mode request transmitted by the other device via the first communication link, and may control the second communication link to be reestablished.

The control unit may change the operation mode of the second communication module supporting the second communication method from the sleep mode to an awake mode when an occurrence of an event that the connection of the first communication link is terminated is detected, and may control the second communication link to be reestablished.

The control unit may change the operation mode of the second communication module supporting the second communication method from the awake mode to the sleep mode as the first communication link whose connection is terminated is reestablished, and may control the connection of the second communication link to be terminated.

The control unit may control setting information on a transmission of a push message to be received from the other device, and may determine whether to transmit the push message to the other device based on the setting information when an operation mode of the second communication module supporting the second communication method is set as a sleep mode.

The plurality of communication links may include at least one of a BLE communication link, a Bluetooth communication link, and a Wi-Fi communication link. It is a further object of the invention to provide a computer-readable recording medium according to independent claim 15. Advantageous embodiments are described in the dependent claims.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a view illustrating a communication system according to an embodiment of the present disclosure;
FIG. 2 is a flowchart illustrating a method in which a device operates as an Access Point (AP) according to an embodiment of the present disclosure;
FIG. 3 is a view illustrating activation of an AP function in a device according to an embodiment of the present disclosure;
FIG. 4 is a diagram illustrating a device broadcasting an advertising packet according to an embodiment of the present disclosure;
FIG. 5 is a view illustrating a result of searching for other devices on a device according to an embodiment of the present disclosure;
FIG. 6 is a flowchart illustrating a method in which a device operates as a low-power AP by using a plurality of communication links according to an embodiment of the present disclosure;
FIGS. 7A, 7B, and 7C illustrate an example of a device sending a request regarding an operation of an AP to another device, according to an embodiment of the present disclosure;
FIG. 8 is a flowchart illustrating a method in which a device determines whether to transmit a push message to another device based on setting information on the transmission of the push message according to an embodiment of the present disclosure;
FIG. 9 illustrates an example of a set-up window for setting the transmission of a push message according to an embodiment of the present disclosure;
FIG. 10 is a flowchart illustrating a method to determine an operation mode of a communication module according to termination of a communication link according to an embodiment of the present disclosure;
FIG. 11 illustrates an example of a device determining an operation mode of an AP based on whether the device is in a communication coverage of a communication method according to an embodiment of the present disclosure;
FIG. 12 is a flowchart illustrating a method in which a device transmits data to another device based on data amount information according to an embodiment of the present disclosure;
FIG. 13 illustrates an example of a device selecting one communication link from among communication links based on data amount information according to an embodiment of the present disclosure; and
FIGS. 14 and 15 are block diagrams illustrating a configuration of a device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

Also, when a part "includes" or "comprises" an element, unless there is a particular description contrary thereto, the part may further include other elements, not excluding the other elements. In the following description, terms such as "unit" and "module" indicate a unit for processing at least one function or operation, wherein the unit and the block may be embodied as hardware or software or may be embodied by combining hardware and software.

Throughout the specification, the term "short range communication" may include at least one of Wi-Fi, Bluetooth, ZigBee, Wi-Fi Direct (WFD), Ultra WideBand (UWB), InfraRed Data Association (IrDA), Bluetooth Low Energy (BLE), Near Field Communication (NFC), and Ant+, but the present disclosure is not limited thereto.

The Wi-Fi may include an infrastructure mode sharing data with a plurality of terminals in which Access Points (APs) delivering wireless signals exist in a certain range, and an ad hoc mode sharing data as a Peer-to-Peer (P2P) type without the APs.

The Bluetooth is a standard for ensuring wireless communication devices perform wireless communication with low power in a short range. The UWB is a wireless technology for transmitting a large amount of data through a broad-spectrum frequency by consuming low power in a short-distance section.

The WFD is a new version of a Wi-Fi technology, and enables devices to communicate with each other directly. That is, the devices in which a Wi-Fi direct is installed may communicate with each other and share information without a hotspot, a router, and an AP.

The ZigBee is one of IEEE 802.15.4 standards supporting the short-range communication. The ZigBee is a technology for the short-range communication that covers about 10-meter to about 20-meter radius, and ubiquitous computing, which belongs to a wireless networking field for houses, offices, or the like.

The BLE is one of short-range communication technologies, and indicates a core function of Bluetooth V 4.0. In comparison to classic Bluetooth, the BLE has a relatively small duty cycle, and may be manufactured with low manufacturing costs. Also, the BLE decreases average power consumption as well as standby power, thus operating for several years with a coin-sized battery.

The NFC is a Radio-Frequency IDentification (RFID), and represents a contactless short-range wireless communication using a frequency band of 13.56 MHz. By using a NFC technology, data may be transmitted between devices in a close distance of about 10 cm. The NFC may include a P2P mode, a Reader/Writer (R/W) mode, and a card emulation mode. The Ant+ indicates a short-range wireless communication technology that consumes low power and uses a frequency band of 2.4 GHz.

The present disclosure will now be described more fully with reference to the accompanying drawings, in which various embodiments of the disclosure are shown. The disclosure may, however, be embodied in many different forms and should not be construed as being limited to the various embodiments set forth herein; rather, these various embodiments are provided so that this disclosure will be thorough and complete, and will fully convey the concept of the disclosure to those skilled in the art. In the drawings, the unnecessary descriptions are omitted, and like numbers refer to like elements throughout.

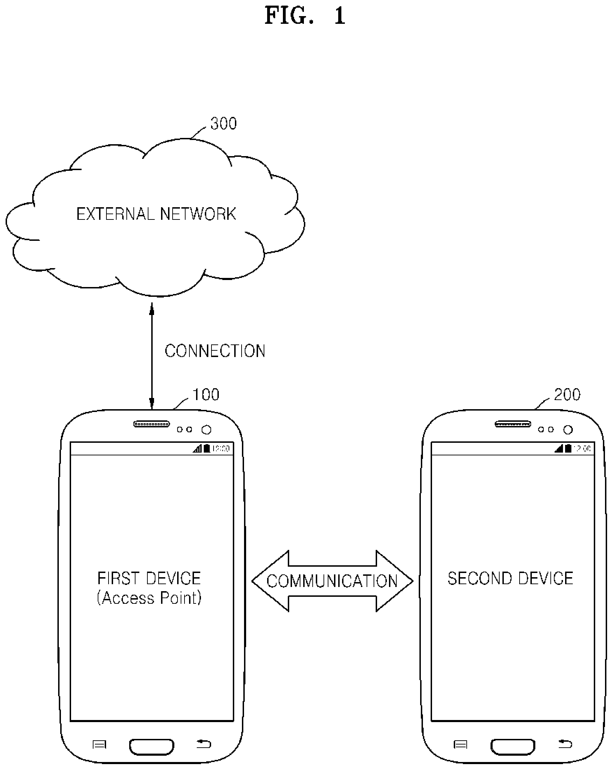

FIG. 1 is a view illustrating a communication system according to an embodiment of the present disclosure.

As illustrated in FIG. 1, the communication system according to the present embodiment may include a first device 100, a second device 200, and an external network 300, but is not limited thereto. The first device 100 may function as an AP, and the second device 200 may be a client device. Hereinafter, each of the first and second devices 100 and 200 will be further described.

In the present embodiment, the first device 100 may include at least one short-range communication module for communicating with the second device 200. For example, the first device 100 may include a Bluetooth communication module, a BLE communication module, a Wi-Fi communication module, a ZigBee communication module, a IrDA communication module, a WFD communication module, an UWB communication module, an Ant+ communication module, or the like, but is not limited thereto.

The first device 100 may be connected to the external network 300. The external network 300 may be 3-Generation (3G), Long-Term Evolution (LTE), Wi-Fi, Wireless Broadband High Speed Packet Access (WiBro HSPA), or the like, but is not limited thereto.

In the present embodiment, the first device 100 receives data that the second device 200 requests through the external network 300, and transmits the received data to the second device 200 through the short-range communication. That is, the first device 100 may provide the mobile hotspot, or a tethering function. In the present embodiment, the mobile hotspot function may be the same as the tethering function. For example, the mobile hotspot and tethering functions may be a function that allows the second device 200 to use the external network 300 through the first device 100.

The first device 100 may be embodied in various forms. For example, the first device 100 described in the present embodiment may be a mobile phone, a smart phone, a laptop computer, a tablet PC, an e-book device, a terminal for digital broadcasting, a Personal Digital Assistant (PDA), a Portable Multimedia Player (PMP), a navigation device, an MP3 player, a digital camera, a wearable device (e.g., glasses, a watch), or the like, but is not limited thereto.

The second device 200 may include at least one short-range communication module for communicating with the first device 100. For example, the first device 100 may include a Bluetooth communication module, a BLE communication module, a Wi-Fi communication module, a ZigBee communication module, an IrDA communication module, a WFD communication module, an UWB communication module, an Ant+ communication module, a Near Field Communication Module (NFC/RFID), or the like, but is not limited thereto.

The second device 200 may search for the first device 100 by using the at least one of short-range communication modules. For example, the second device 200 may search for the first device 100 by receiving signals transmitted from the first device 100, and analyzing the received signals. According to the present embodiment, the second device 200 may send a tethering or connecting request to the searched first device 100.

The second device 200 may vary according to the present embodiment. The second device 200 may be a display device including a screen, or an accessory device without a screen. For example, the second device 200 may be a mobile phone, a smart phone, a laptop computer, a tablet PC, an e-book device, a terminal for digital broadcasting, a PDA, a PMP, an audio apparatus, a display device, a navigation device, an MP3 player, a digital camera, a smart TV, a wireless speaker, a Bluetooth headset, glasses, a watch, home sinks, a refrigerator, an air conditioner, a water purifier, etc., having a communication function, but is not limited thereto.

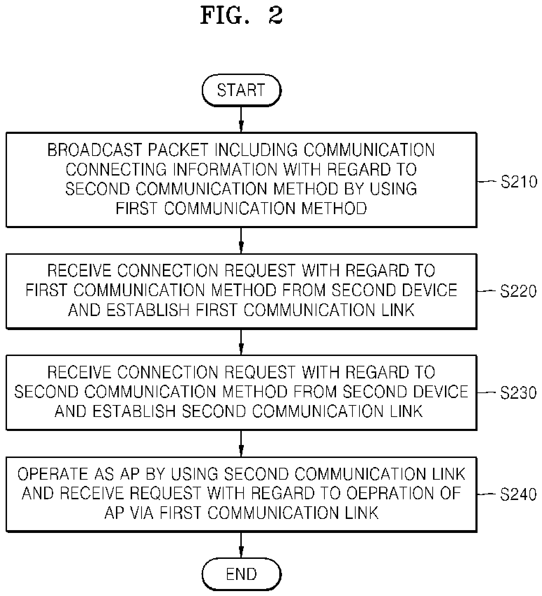

Hereinafter, a method in which the first device 100 operates as a low-power AP by using communication links will be described in detail with reference to FIG. 2.

FIG. 2 is a flowchart illustrating a method in which a device operates as an AP according to an embodiment of the present disclosure.

In operation S210, the first device 100 may broadcast a packet including communication connecting information with regard to a second communication method by using a first communication method.

The term 'broadcast' indicates providing data to the outside. For example, 'broadcast' may include provision, transmission, display, or output of data, but is not limited thereto.

According to the present embodiment, the first and second communication methods may be different. The first communication method may include, but is not limited to, a BLE communication method, and the second communication method may include, but is not limited to, a Wi-Fi or Bluetooth communication method. For example, the first device 100 may broadcast a packet including communication connecting information with regard to the Wi-Fi or Bluetooth communication method via the BLE communication method.

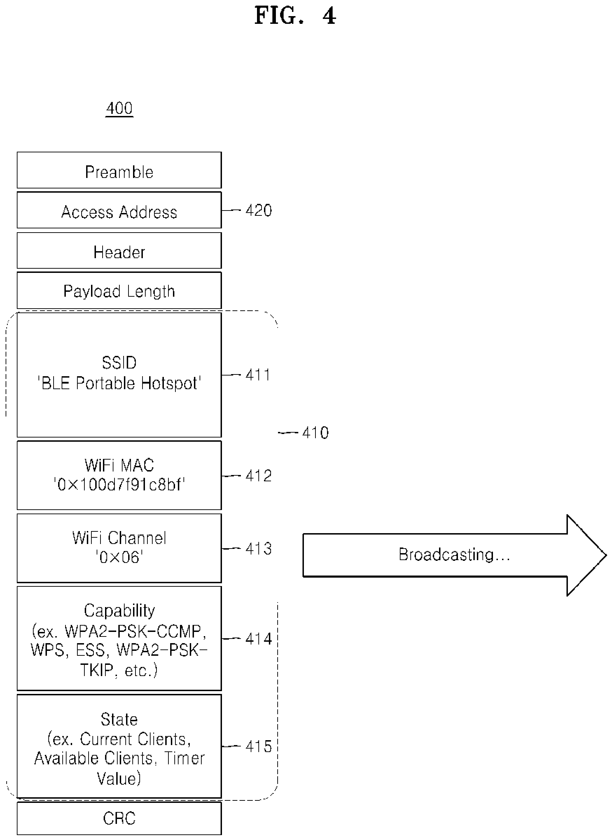

According to the present embodiment, the packet including the communication connecting method with regard to the first communication method may be an advertising packet according BLE standards. In this regard, the first device 100 may replace a Wi-Fi beacon with the BLE advertising packet so that the power that is consumed to broadcast the beacon may be reduced, which will be further described later with reference to FIG. 4.

The communication connecting information with regard to the second communication method may be information that allows an external device to be connected to the first device 100 by using the second communication method. For example, in a case where the second communication method is the Wi-Fi communication method, the communication connecting method regarding the second communication method may include, but is not limited to, at least one of Time Stamp, identification information (e.g., a Service Set IDentifier (SSID), a Basic Service Set IDentifier (BSSID), a Media Access Control address (MAC address)), channel information, function information (e.g., tethering capability), state information, and the like. Also, in a case where the second communication method is the Bluetooth communication method, the communication connecting information regarding the second communication method may include at least one of a Bluetooth address (BT address), a product name, profile information, etc., but is not limited thereto.

In operation S220, the first device 100 may receive a connection request with regard to the first communication method from the second device 200 having the received packet. In addition, the first device 100 may establish a first communication link using the first communication method.

The connection request may include a pairing request. The term 'pairing' indicates a process performed between the first and second devices 100 and 200 supporting the Bluetooth function in order to identify designated passwords, identification information, security information, authentication information, etc. for mutual communication connection, but is not limited thereto.

Also, the terms 'establish a first communication link' may indicate that the first and second devices 100 and 200 may be in a state for receiving and transmitting data through the first communication method. For example, in a case where the first communication method is the BLE communication method, the first device 100 may establish a BLE communication link with the second device 200.

In the present embodiment, the BLE communication link (the first communication link) may be a non-connection-type virtual communication link for receiving and transmitting an advertising packet through a mutual scan between the first and second devices 100 and 200, or may be a connection-type communication link in which a session is established due to a BLE connection request sent by the second device 200.

In operation S230, the first device 100 may receive the connection request with regard to the second communication link from the second device 200. The first device 100 may establish the second communication link using the second communication method. According to the preset embodiment, the second communication link may differ from the first communication link.

Since the packet broadcasted by the first device 100 includes the communication connecting information with regard to the second communication method, the second device 200 may send the connection request regarding the second communication method to the first device 100 based on the communication connecting information with regard to the second communication method. For example, in a case where the second communication method is the Wi-Fi communication method, the second device 200 may request a Wi-Fi connection to the first device 100 based on Wi-Fi connection information (e.g., SSID, BSSID, the number of channels, and Time Stamp) included in the packet.

In this regard, when a user enters, identifies, or selects the authentication information (e.g., PIN: personal identification number), the second device 200 may transmit the authentication information to the first device 100, and request a connection with regard to the second communication method. According to the present embodiment, the first device 100 may compare the authentication information transmitted by the second device 200 with previous set authentication information. As a result of the comparison, when the authentication information transmitted by the second device 200 and the previous set authentication information are identical, the first device 100 may establish the second communication link with the second device 200 via the second communication method by transmitting a message that responds to the connection request to the second device 200.

In operation S240, the first device 100 may operate as the AP by using the second communication link. For example, the first device 100 may receive a request for transmitting certain data from the second device 200 through the second communication link. The first device 100 may send a request to the external network 300 connected to the first device 100 in order to receive the certain data, and may transmit the received certain data to the second device 200 through the second communication link.

In addition, the first device 100 may receive a request with regard to operation of the AP from the second device 200 through the first communication link. According to the present embodiment, the request with regard to the operation of the AP may include a sleep-mode request, or an awake-mode request.

The sleep-mode request may be a request for asking a change of an operation mode of the AP to a low-power AP mode when Internet connection of the second device 200 is not necessary. For example, the sleep-mode request may include a request for terminating a connection of the second communication link, which is a data receiving/transmitting channel, or may be a request for changing an operation mode of a communication module (e.g., a Wi-Fi communication module or Bluetooth communication module) supporting the second communication method to the sleep mode.

The awake-mode request may be a request for changing the operation mode of the AP, which is set as the low-power AP mode, to a normal mode. For example, the awake-mode request may include a request for re-establishing the second communication link, which is the data receiving/transmitting channel, or may be a request for changing an operation mode of a communication module (e.g., a Wi-Fi communication module or Bluetooth communication module) supporting the second communication method to the awake mode.

According to the embodiment, the first device 100 may change the operation mode of the communication module supporting the second communication method based on the request with regard to the operation of the AP.

For example, the first device 100 may receive the sleep-mode request from the second device via the first communication link. In this case, the first device 100 sets the operation mode of the communication module supporting the second communication method as the sleep mode, thereby terminating the connection of the second communication link. The first device 100 may maintain the connection of the first communication link that will be used as a control channel.

The first device 100 may receive the awake-mode request (e.g., a wake-up command) from the second device 200 via the first communication link when the operation mode of the communication module supporting the second communication method is set as the sleep mode. The first device 100 may change the operation mode of the communication module supporting the second communication method, which is set as the sleep mode, to the awake mode, and reestablish the second communication link.

When the request for transmitting the data is not transmitted by the second device 200 for a predetermined time, the first device 100 may set the operation mode of the communication module supporting the second communication method as the sleep mode, thus terminating the connection of the second communication link. In this regard, the first device 100 may maintain the connection of the first communication link.

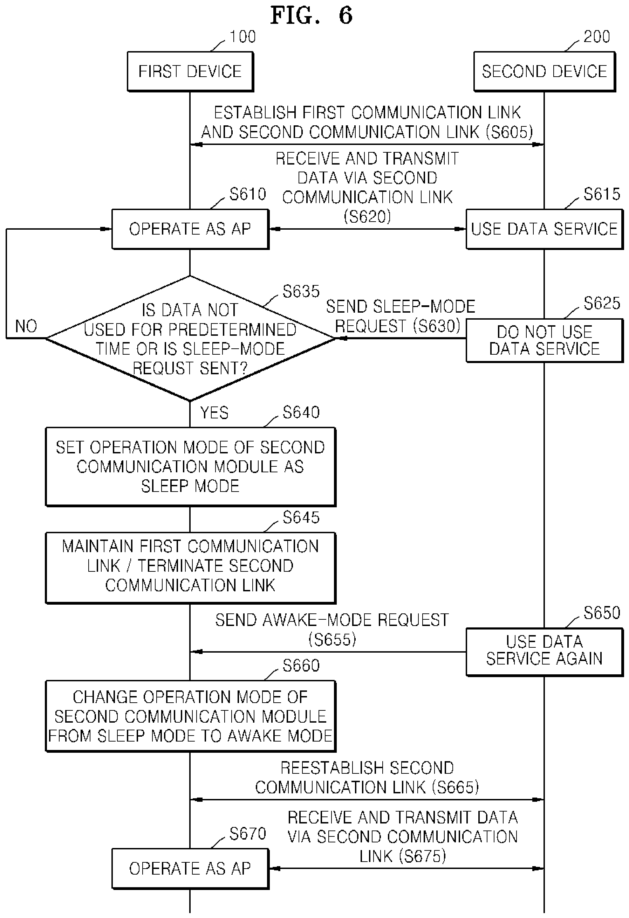

The first device 100 may terminate the connection of the second communication link to reduce the power consumption, and may maintain the low-power first communication link as the control channel when the first device 100 finishes or stops functioning as a mobile AP. The first device 100 may quickly reestablish the second communication link through the first communication link when the second communication link is required again (for example, when the second device 200 requires to use the Internet again). This will be further described later with reference to FIG. 6.

According to various embodiments, the order of operations S210 to S240 may be changed, and some operations may be omitted. For convenience of explanation, the communication module supporting the second communication method will be referred to as a second communication module.

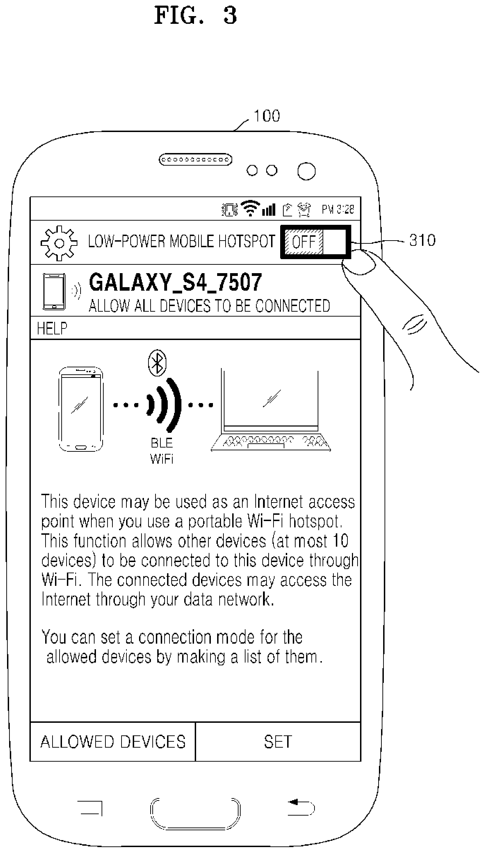

FIG. 3 is a view illustrating activation of an AP function in a device according to an embodiment of the present disclosure.

FIG. 3 is based on a case that the first communication method is the BLE communication, and the second communication method is the Wi-Fi communication.

As illustrated in FIG. 3, the first device 100 may provide an icon or a button 310 and the like for activating the low-power AP function. In this case, a user selects the button 310 to activate the low-power AP function in the first device 100. When the low-power AP function (hereinafter, referred to as 'low-power AP mode') is activated in the first device 100, the first device 100 may use the BLE communication, and broadcast the packet including the Wi-Fi connection information.

Also, when a request for transmitting data is not transmitted by the second device 200 for a predetermined time in the low-power AP mode, or when the sleep-mode request is transmitted by the second device 200, the first device 100 may set the operation mode of the Wi-Fi communication module as the sleep mode. Therefore, the first device 100 may reduce the standby power consumed by the Wi-Fi communication module. Additionally, the number of user manipulation such as manually inactivating the Wi-Fi communication module to reduce the standby power when the data is not used, or manually activating the Wi-Fi communication module when the data is used again, may be decreased, thus providing convenience for users.

FIG. 4 is a diagram illustrating a device broadcasting an advertising packet according to an embodiment of the present disclosure.

FIG. 4 is based on the case that the first communication method is the BLE communication, and the second communication method is the Wi-Fi communication.

As illustrated in FIG. 4, when the low-power AP function is activated, the first device 100 may insert Wi-Fi communication connecting information 410 into a payload section of the BLE advertising packet 400. For example, the first device 100 may insert SSID 411 (e.g., BLE Portable Hotspot), Wi-Fi MAC address 412 (e.g., OX100d7f91c8bf), a Wi-Fi channel 413 (e.g., OX06), capability 414 (e.g., WPA2-PSK-CCMP, WPS, ESS, WPA2-PSK-TKIP), state 415 (e.g., current clients, available clients, timer value), or the like into the payload section of the BLE advertising packet 400.

The first device 100 may broadcast the BLE advertising packet 400 in which the Wi-Fi communication connecting information is inserted in a predetermined cycle (e.g., 100 ms). The second device 200 that receives the BLE advertising packet 400 may send a Wi-Fi connection request to the first device 100 by using the Wi-Fi connecting information 410.

An address field 420 that may send a request for a BLE communication connection to the first device 100 may be included in a header of the BLE advertising packet 400. According to the present embodiment, a random address may be written in the address field 420 for protecting privacy. The second device 200 that receives the BLE advertising packet 400 may use the random address included in the address field 420, and send a BLE connection request to the first device 100.

According to the present embodiment, the first device 100 may insert the Wi-Fi connecting information to the BLE advertising packet 400 instead of a Wi-Fi beacon for broadcasting, and may reduce the power consumption.

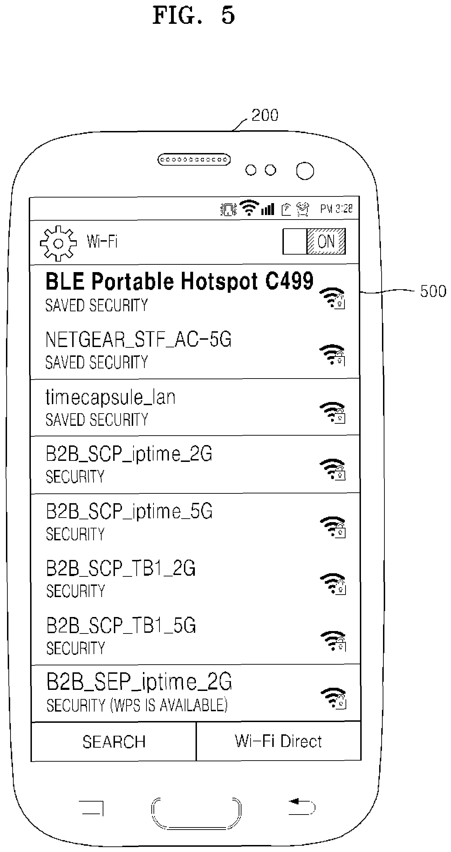

FIG. 5 is a view illustrating a result of searching for other devices on a device according to an embodiment of the present disclosure.

FIG. 5 is based on the case that the first communication method is the BLE communication, and the second communication method is the Wi-Fi communication method.

As illustrated in FIG. 5, the second device 200 may scan the first device 100 that broadcasts the BLE advertising packet 400 by using the BLE communication method. In this case, the second device 200 may add identification information 500 (e.g., BLE Portable Hotspot) of the first device 100 to a list of the searched devices, and display the same.

When a user selects the identification information 500 of the first device 100 from the searched device list, the second device 200 may use information included in the BLE advertising packet 400 of the first device 100, and may transmit a connection request (e.g., the BLE connection request) with regard to the first communication method, and a connection request (e.g., the Wi-Fi connection request) with regard to the second communication method to the first device 100.

Referring to FIGS. 4 through 6, the first communication method is the BLE communication, and the second communication method is the Wi-Fi communication, but the present disclosure is not limited thereto. For example, the first communication method may be the BLE communication, and the second communication method may be a classic Bluetooth communication.

FIG. 6 is a flowchart illustrating a method in which a device operates as a low-power AP by using a plurality of communication links according to an embodiment of the present disclosure.

In operation S605, the first and second devices 100 and 200 may establish the first and second communication links. A process that the first and second devices 100 and 200 establish the first and second communication links corresponds to operations S210 to S230 of FIG. 2, and thus the detailed description thereof will be omitted.

In operation S610, the first device 100 may operate as the AP by using the second communication method (e.g., Wi-Fi or Bluetooth). For example, in operation S615, in a case where the second device 200 uses a data service, the second device 200 in operation S620 may transmit a request for transmitting data to the first device 100 via the second communication link. In this regard, the first device 100 may receive the data from the external network 300 connected to the first device 100, and may transmit the received data to the second device 200 through the second communication link.

In operation S625, the second device 200 may not use the data service for a certain amount of time or more. For example, a user may turn off a screen of the second device 200 (LCD off), or may only operate an application that does not require Internet access. In this regard, the second device 200 may detect that the user does not use the data service, and may send a sleep-mode request to the first device 100.

According to the present embodiment, the sleep-mode request may be transmitted via the first communication link or the second communication link.

In operation S635, the first device 100 may determine whether the sleep-mode request is received. Also, the first device 100 may determine whether the second device 200 uses the data or not for a certain amount of time.

In operation S640, in a case where the sleep-mode request is transmitted by the second device 200, or in a case where the data service is not used in the second device 200 for a certain amount of time (e.g., five or more seconds), the first device 100 may set the operation mode of the second communication module as the sleep mode. According to the present embodiment, a certain amount of time (e.g., five seconds) for which the operation mode of the second communication module is changed into the sleep mode may be set or changed by a user or by the first device 100, but is not limited thereto.

In operation S645, the first device 100 may maintain the first communication link, which consumes low power, as the control channel, and may terminate the connection of the second communication link.

In operation S650, the second device 200 may use the data service again. In operation S655, the second device 200 may transmit the awake-mode request to the first device 100 via the first communication link that has been maintained as the control channel.

In operation S660, when the awake-mode request is transmitted by the second device 200 via the first communication link, the first device 100 may change the operation mode of the second communication module, which is the sleep mode, to the awake mode. In operation S665, the first device 100 may reestablish the second communication link based on the connection information of the second communication link.

In operation S670, the first device 100 may operate as the AP with regard to the second device 200. In operation S675, the first device 100 may transmit the data received from the external network 300 connected to the first device 100 to the second device 200 via the second communication link.

According to the present embodiment, when the first device 100 stops operating as the AP, the first device 100 may terminate the second communication link to reduce the power consumption, and may maintain the low-power first communication link as the control channel. Accordingly, when the second communication link is required again (e.g., when there is data to be transmitted or when the second device 200 requires to use the Internet again), the first and second devices 100 and 200 may quickly reestablish the second communication link by using the first communication link.

According to the various embodiments, the order of operations S605 to S675 may change, or some operations may be omitted.

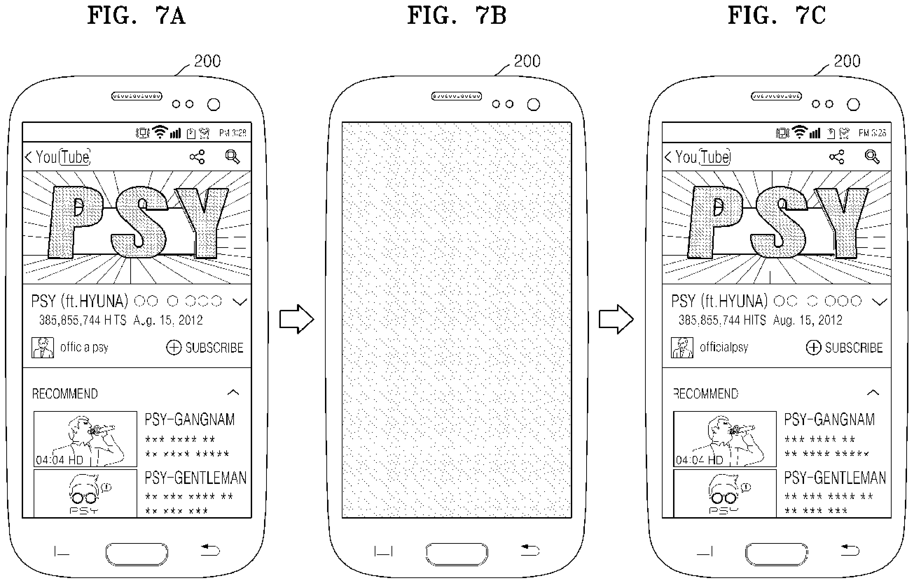

FIGS. 7A, 7B and 7C illustrate an example of device sending a request regarding an operation of the AP to anther device, according to an embodiment of the present disclosure.

As illustrated in FIG. 7A, when the second device 200 needs to use the data service, the second device 200 may send a request for transmitting the data via the second communication link to the first device 100 that operates as the AP. In this regard, the first device 100 receives the data via the external network 300 (e.g., 3G, 4G, 5G, etc.) connected to the first device 100, and may function as a repeater for transmitting the received data to the second device 200.

As illustrated in FIG. 7B, when the screen of the second device 200 is turned off, the second device 200 does not require the Internet access any more so that the first device 100 may transmit the sleep-mode request to the first device 100 via the first communication link. According to the present embodiment, the first device 100 may change the operation mode of the Wi-Fi or Bluetooth communication module to the sleep mode. Therefore, the first device 100 may reduce the standby power consumed by the Wi-Fi or Bluetooth communication module. The first device 100 may maintain the low-power first communication link (e.g., the BLE communication link) as the control channel.

As illustrated in FIG. 7C, when the second device 200 requires the Internet access again, the second device 200 may send the awake-mode request to the first device 100 via the first communication link. In this case, the first device 100 may change the operation mode of the Wi-Fi or Bluetooth communication module, which is set as the sleep mode, to the awake mode, and may reestablish the second communication link.

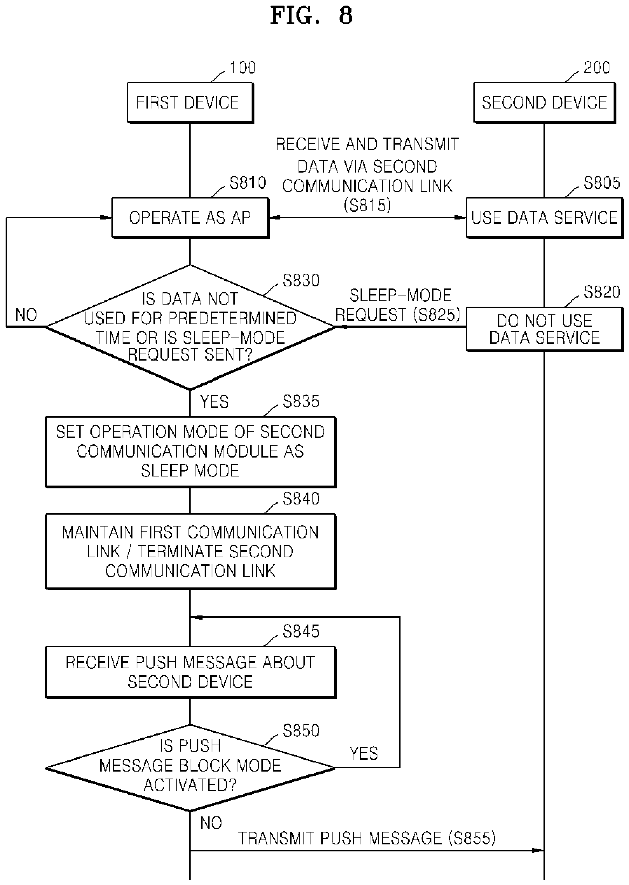

FIG. 8 is a flowchart illustrating a method in which a device determines whether to transmit a push message to another device based on setting information on the transmission of the push message, according to an embodiment of the present disclosure.

Operations S805 to S840 correspond to operations S610 to S645 of FIG. 6, and thus the detailed description thereof will be omitted.

In operation S845, the first device 100 may receive the push message about the second device 200 from the external network 300, which is connected to the first device 100, in a low-power AP mode state in which the connection of the second communication link is terminated. The low-power AP mode state indicates a state that the connection of the second communication link is terminated after the operation mode of the second communication mode is set as the sleep mode, and the connection of the first communication link is maintained as the control channel.

In operation S850, the first device 100 may check the setting information on the transmission of the push message. For example, when the push message is set to be blocked, the first device 100 may not transmit the push message to the second device 200. The second communication module (e.g., the Wi-Fi communication module or Bluetooth communication module) may still be in the sleep mode so that the standby power may not be consumed by the second communication module.

Also, in operation S855, when the push message is set to be transmitted after the setting information on the transmission of the push message is checked, the first device 100 may reestablish the second communication link, and may transmit the push message to the second device 200 via the second communication link.

When the push message is in an alarm mode after the setting information on the transmission of the push message is checked, the first device 100 may transmit an alarm message notifying an arrival of the push message via the first communication link. Furthermore, when a request for transmitting the push message is transmitted by the second device 200 via the first communication link as a response to the alarm message, the first device 100 may reestablish the second communication link, and may transmit the push message to the second device 200 via the second communication link.

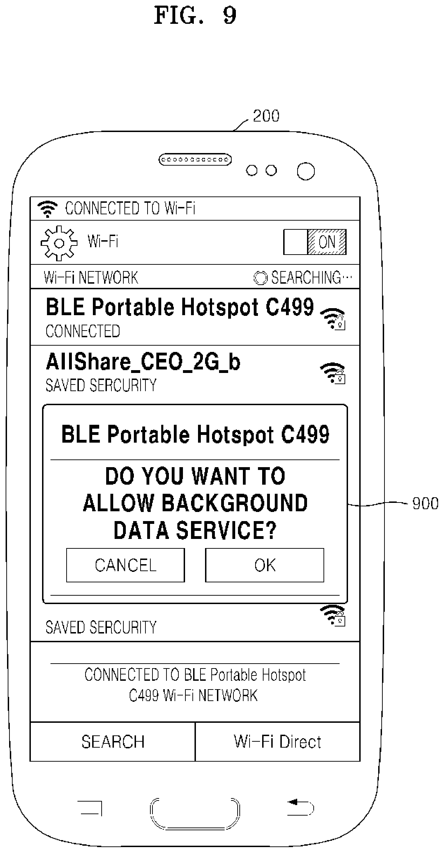

FIG. 9 illustrates an example of a set-up window for setting the transmission of a push message according to an embodiment of the present disclosure.

As illustrated in FIG. 9, the second device 200 may provide the set-up window 900 that determines whether to keep receiving the push message about the second device 200, which is received by the first device 100, even in the low-power AP mode.

According to the present embodiment, a user of the second device 200 may set to receive the push message even in the low-power AP mode on the set-up window 900. When the push message about the second device 200 is transmitted in the low-power AP mode, the first device may change the operation mode of the second communication module from the sleep mode to the awake mode, and may reestablish the second communication link. Also, the first device 100 may transmit the push message to the second device 200 via the second communication link.

According to the present embodiment, the user of the second device 200 may set not to receive the push message in the low-power AP mode on the set-up window 900. When the push message about the second device 200 is transmitted in the low-power AP mode, the first device 100 may ignore the push message, and may not transmit the push message to the second device 200. When the second communication link is reestablished later, the first device 100 may transmit at least one push message received in the low-power AP mode to the second device 200 via the reestablished second communication link.

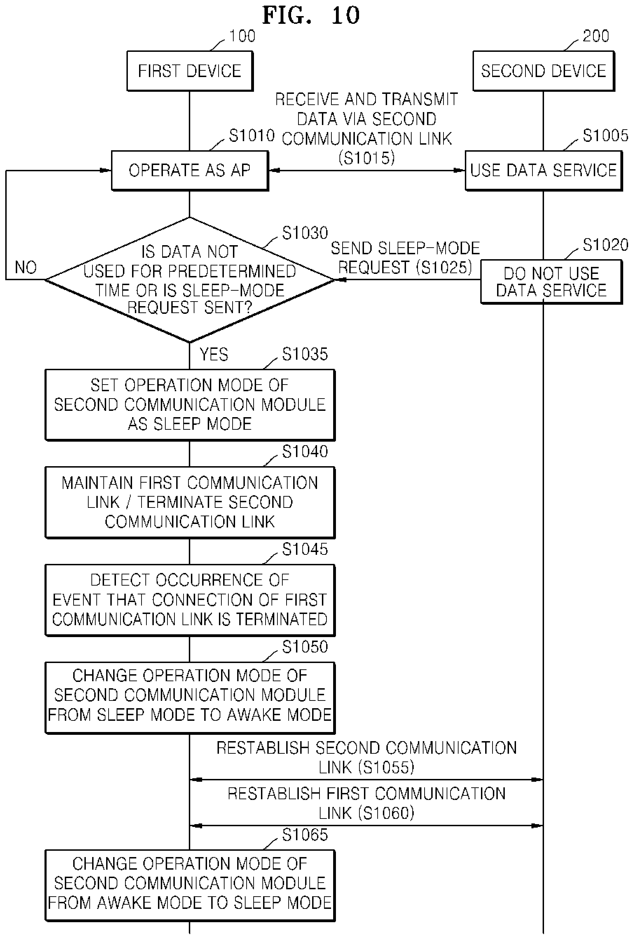

FIG. 10 is a flowchart illustrating a method to determine the operation mode of a communication module according to termination of a communication link according to an embodiment of the present disclosure.

Operations S1005 to S1040 correspond to operations S610 to S645 of FIG. 6, and thus the detailed description thereof will be omitted. In operation S1040, the first device 100 may be in the low-power AP mode that the second communication link is terminated, and the first communication link is maintained as the control channel.

In operation S1045, the first device 100 may detect an occurrence of an event that the connection of the first communication link is terminated. For example, the first device 100 may detect that the second device 200 exceeds a communication coverage of the first communication method, but various embodiments of the present disclosure are not limited thereto. The connection of the first communication link may be terminated by various reasons (e.g., in the case of a severe interruption of external signals, etc.). Since the connection of the first communication link that has been used as the control channel is terminated, the first device 100 may not maintain the low-power AP mode.

In operation S1050, the first device 100 may change the operation mode of the communication module supporting the second communication method from the sleep mode to the awake mode. In operation S1055, the first device 100 may reestablish the second communication link with the second device 200.

In operation S1060, the first device 100 may reestablish the first communication link. For example, when the second device 200 enters the communication coverage of the first communication method, the first device 100 uses the first communication method to search the second device 200. The first device 100 may reestablish the first communication link with the second device 200. Alternatively, the second device 200 uses the first communication method to search the first device 100, and may ask reconnection to the first device 100. In this regard, the first device 100 may reestablish the first communication link with the second device 200 by transmitting a response message about a reconnection request to the second device 200.

In operation S1065, as the first communication link is reestablished, the first device 100 may change the operation mode of the communication module supporting the second communication method from the awake mode to the sleep mode. According to the present embodiment, the first device 100 may terminate the connection of the second communication link, and may maintain the first communication link as the control channel. That is, the first device 100 may operate as the low-power AP mode again.

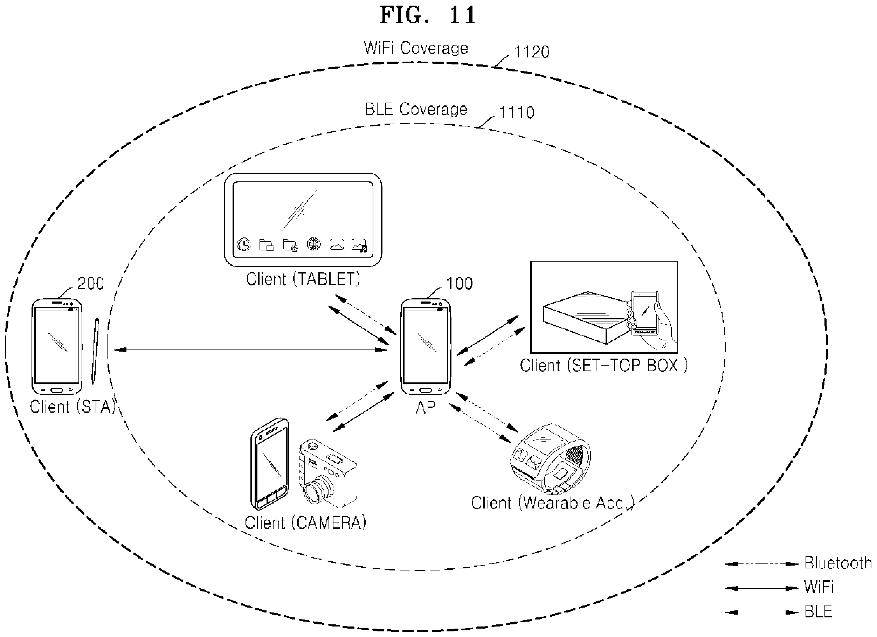

When the connection of the first communication link is terminated, the first device 100 may change its own mode from the low-power AP mode to a normal AP mode. The normal AP mode may be a mode that maintains the connection of the second communication link even though the second device 200 does not use the data service. In a case where the first communication link is reestablished later, the first device 100 may change its own mode from the normal AP mode to the low-power AP mode so as to reduce the power consumption, which will be further described with reference to FIG. 11.

FIG. 11 illustrates an example of a device determining an operation mode of the AP based on whether the device is in the communication coverage of a communication method according to an embodiment of the present disclosure.

FIG. 11 is based on the case that the first communication method is the BLE communication, and the second communication method is the Wi-Fi communication.

As illustrated in FIG. 11, in a case where a location of the second device 200 exceeds a range of the BLE communication 1110, but is in a range of the Wi-Fi communication 1120 based on the first device 100, the first device 100 may not maintain the BLE communication link that has been used as the control channel in the low-power AP mode. In this case, the second device 200 may not transmit the awake-mode request to the first device 100 via the BLE communication link.

Accordingly, the first device 100 may change the low-power AP mode to the normal AP mode. That is, the first device 100 may reestablish the Wi-Fi communication link for receiving/transmitting the data. Also, the first device 100 may not detect when the second device 200 uses the data so that the first device 100 may maintain the Wi-Fi communication link regardless of the data use of the second device 200.

According to the present embodiment, when the location of the second device 200 is in the range of the BLE communication 1110 based on the first device 100, the first device 100 may reestablish the BLE communication link with the second device 200. In this regard, the first device 100 may use the BLE communication link as the control channel. Therefore, when the second device 200 does not use the data service, the first device 100 may operate as the low-power AP mode. For example, the first device 100 may change the operation mode of the Wi-Fi communication module to the sleep mode, and may terminate the connection of the second communication link.

The first device 100 may set the operation mode of the AP as the low-power AP mode or the normal AP mode by considering a difference of the communication coverage between the first and second communication methods.

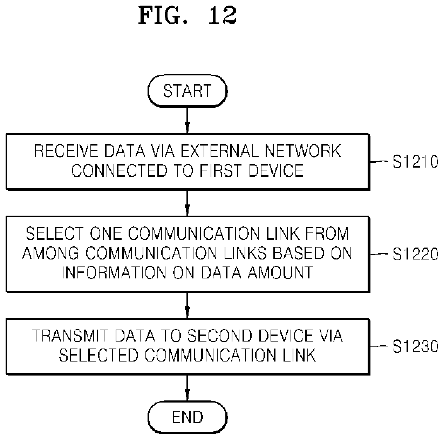

FIG. 12 is a flowchart illustrating a method in which a device transmits data to another device based on data amount information according to an embodiment of the present disclosure.

In operation S1210, the first device 100 operating as the AP may receive the data via the external network 300 connected to the first device 100. The data may vary. For example, the data may be a multimedia content, a push message, application execution data, or webpage data, but is not limited thereto.

In operation S1220, the first device 100 may select any one of communication links established between the first and second devices 100 and 200. The communication links may include, but are not limited to, the BLE communication links, the Wi-Fi communication links, or the Bluetooth communication links.

For example, when the amount of the data received via the external network 300 exceeds a predetermined value, the first device 100 selects the Wi-Fi communication link, and when the amount of the data received via the external network 300 is smaller than the predetermined value, the first device 100 may select the BLE communication link. Also, the first device 100 may select the BLE communication link when the amount of the data is equal to or lower than a first critical value, and when the amount of the data is between the first critical value and a second critical value, the first device 100 may select the Bluetooth communication link. When the amount of the data is equal to or higher than the second critical value, the first device 100 may select the Wi-Fi communication link.

In operation S1230, the first device 100 may transmit the data to the second device 200 via the selected communication link. For example, when the Wi-Fi communication link is selected, the first device 100 may use the Wi-Fi communication method to transmit the data to the second device 200.

According to the embodiment, the first device 100 may use any one of communication links, which are established between the first and second devices 100 and 200, as the control channel in order to operate as the low-power AP mode.

For example, when the request for transmitting the data is not transmitted by the second device 200, the first device 100 may terminate the connection of the first communication link, and may maintain the connection of the second communication link from among the communication links.

Also, when the sleep-mode request is transmitted by the second device 200, the first device 100 responds to the sleep-mode request in order to terminate the connection of the first communication link, and to maintain that of the second communication link from among the communication links.

The first device 100 may select the first communication link from among the communication links based on information on the amount of the power consumption, but is not limited thereto. The first device 100 may terminate the connection of the selected first communication link. For example, when the first device 100 finishes or stops functioning as the AP, the first device 100 may maintain the second communication link as the control channel that consumes relatively low power, and may terminate the connection of the first communication link that consumes relatively large power.

According to another embodiment of the present disclosure, the first device 100 may receive the data via the external network 300 connected to the first device 100, and based on the information on the amount of the received data, the first device 100 may select one of the communication methods capable of communicating between the first and second devices 100 and 200. The communication methods may include the BLE communication method, the Wi-Fi communication method, and the Bluetooth communication method, but are not limited thereto.

The first device 100 may establish the communication link based on the selected communication method, and may transmit the data to the second device 200 through the established communication link.

For example, the first device 100 may establish the first communication link (e.g., the BLE communication link), and the second communication link (e.g., the Wi-Fi communication link or the Bluetooth communication link), and may operate as the AP. When the request for transmitting the data is not transmitted by the second device 200 for a predetermined time, the first device 100 may set the operation mode of the communication module supporting the second communication method as the sleep mode in order to terminate the connection of the second communication link (e.g., the Wi-Fi communication link or the Bluetooth communication link). According to the embodiment, the first device 100 may maintain the first communication link as the non-contact type in order to use the first communication link as the control channel. For example, the first device 100 may replace the first communication link (e.g., the BLE communication link) with the non-contact-type communication link, which broadcasts the advertising packet, instead of a contact-based communication link.

The first device 100 may receive the data (e.g., the push message) via the external network 300 connected to the first device 100 in a state that only the control channel is maintained. In this case, the first device 100 may select one of the communication methods capable of communicating between the first and second devices 100 and 200 based on the information on the amount of the received data.

For example, when the amount of the data is equal to or less than the first critical value, the first device 100 may select the BLE communication method, and when the amount of the data is between the first and second critical values, the first device 100 may select the Bluetooth communication method, but is not limited thereto. When the amount of the data is equal to or higher than the second critical value, the first device 100 may select the Wi-Fi communication method, but is not limited thereto.

The first device 100 may establish the communication link with the second device 200 based on the selected communication method. For example, the first device 100 may transmit the connection request with regard to the selected communication method (e.g., BLE, Wi-Fi, or Bluetooth) to the second device 200 via the first communication link (e.g., BLE advertising packet broadcast) that is the non-contact type. In a case where the first device 100 receives the response message about the connection request from the second device 200 via the first communication link (e.g., BLE advertising packet broadcast) that is the non-contact type, the first device 100 may reestablish the second communication link (e.g., BLE communication link, Wi-Fi communication link, or Bluetooth communication link), which is based on the selected communication method, with the second device 200. The first device 100 may transmit the data to the second device 200 via the reestablished second communication link. The first device 100 may receive the connection request with regard to the second communication method from the second device 200 through the first communication link that is the non-contact type. The first and second devices 100 and 200 may reestablish the second communication link based on the second communication method after the first device 100 transmits the response message about the connection request of the second device 200 to the second device 200.

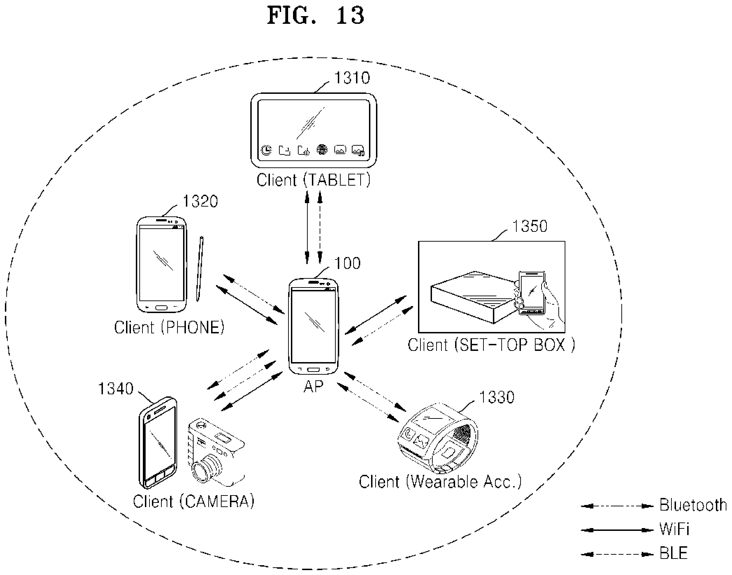

FIG. 13 illustrates an example of a device selecting one communication link from among communication links based on data amount information according to an embodiment of the present disclosure.

As illustrated in FIG. 13, the first device 100 may provide a first client device 1310 with the Wi-Fi tethering (e.g., Wi-Fi mobile hotspot) service and the BLE tethering service. In a case where the first device 100 receives a first data, which has to be transmitted to the first client device 1310, from the external network 300, the first device 100 may select one of the Wi-Fi and BLE communication links based on information on the amount of the first data. For example, the first device 100 may select the BLE communication link when the push message is transmitted, or may select the Wi-Fi communication link when data about a webpage is transmitted.

The first device may provide a second client device 1320 with the Wi-Fi tethering (e.g., Wi-Fi mobile hotspot) service and the Bluetooth tethering service. In a case where the first device 100 receives a second data, which has to be transmitted to the second client device 1320, from the external network 300, the first device 100 may select one of the Wi-Fi and BLE communication links based on information on the amount of the second data. For example, the first device 100 may select the Bluetooth communication link when the push message is transmitted, or may select the Wi-Fi communication link when music data is transmitted.

The first device 100 may provide the Bluetooth tethering service and the BLE tethering service for a third client device 1330. In a case where the first device 100 receives a third data, which has to be transmitted to the third client device 1330, from the external network 300, the first device 100 may select one of the Bluetooth and BLE communication links based on information on the amount of the third data. For example, the first device 100 may select the BLE communication link when the push message is transmitted, or may select the Bluetooth communication link when online game data is transmitted.

According to the embodiment, the first device 100 may provide a fourth client device 1340 with the Wi-Fi tethering (e.g., Wi-Fi mobile hotspot) service, the Bluetooth tethering service (e.g., Bluetooth PAN), and the BLE tethering service. The first device 100 may use the Wi-Fi and Bluetooth communication links as a data receiving/transmitting channel, and the BLE communication link as the control channel.

For example, in a case where the fourth client device 1340 does not use the Internet for a certain amount of time, or in a case where the sleep-mode request is transmitted by the fourth client device 1340, the first device 100 may terminate the connections of the Wi-Fi and Bluetooth communication links, and maintain the BLE communication link as the control channel.

The first device 100 may provide a fifth client device 1350 with the Wi-Fi tethering (e.g., Wi-Fi mobile hotspot) service and the BLE tethering service. In a case where the first device 100 receives a first data, which has to be transmitted to the fifth client device 1350, from the external network 300, the first device 100 may select one of the Wi-Fi and BLE communication links based on information on the amount of the first data. For example, the first device 100 may select the BLE communication link when the push message is transmitted, or may select the Wi-Fi communication link when data about a webpage is transmitted.

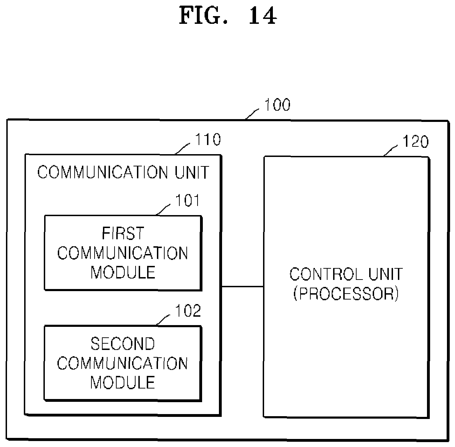

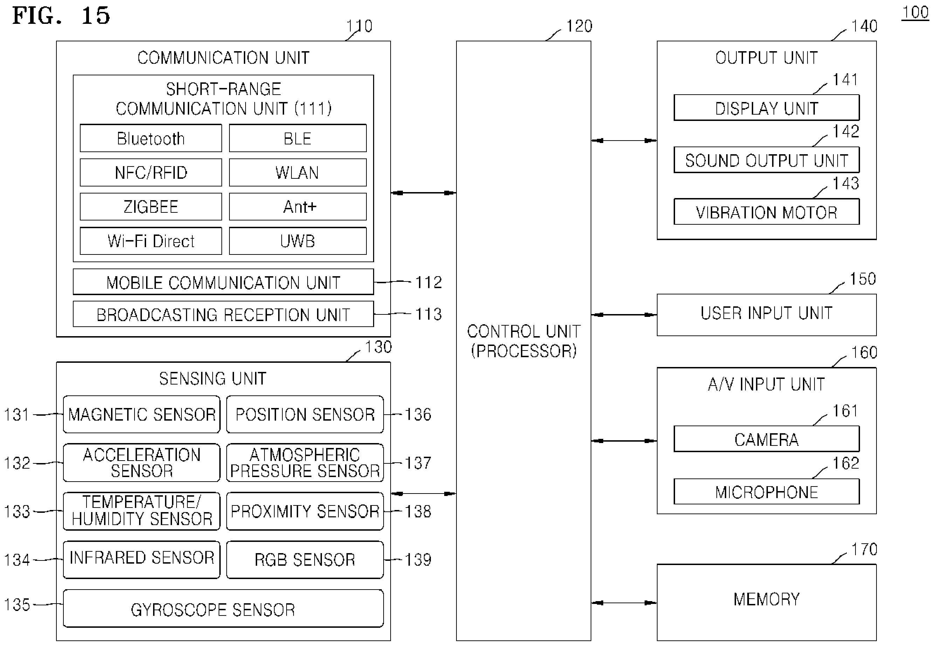

FIGS. 14 and 15 are block diagrams illustrating a configuration of a device according to an embodiment of the present disclosure.

As illustrated in FIG. 14, the first device 100 may include a communication unit 110, and a control unit 120. However, not every unit illustrated in the drawing is necessary. The first device 100 may be embodied by more or less units than those illustrated in the drawing. For example, as illustrated in FIG. 15, the first device 100 may further include a sensing unit 130, an output unit 140, a user input unit 150, an Audio/Video (A/V) input unit 160, and a memory 170 other than the communication unit 110, and the control unit 120.

Hereinafter, each unit will be described in detail.

The communication unit 110 may include one or more units that enable the first and second devices 100 and 200, or the first device 100 and the external network 300 to communicate with each other. For example, the communication unit 110 may include a short-range communication unit 111, a mobile communication unit 112, and a broadcasting reception unit 113.

The short-range communication unit 111 may include, but is not limited to, the Bluetooth communication module, the BLE communication module, the NFC/RFID communication module, the WLAN communication module, the ZigBee communication module, the IrDA communication module, the WFD communication module, the UWB communication module, and Ant+ communication module.

The mobile communication unit 112 may receive and transmit wireless signals from and to at least one of a station, an external terminal, and a server. The wireless signals may include various types of data according to a voice call signal, a video telephone call signal, or reception/transmission of a text/multimedia message.

The broadcasting reception unit 113 receives a broadcasting signal and/or information related to the broadcast from the outside via broadcasting channels. According to the various embodiments, the first device 100 may not include the broadcasting reception unit 113.

The communication unit 110 may include a first communication module 101, and a second communication module 102 for operating as the AP. The first and second communication modules 101 and 102 may be one of the short-range communication modules. For example, the first communication module 101 may be the BLE communication module, and the second communication module 102 may be the Wi-Fi or Bluetooth communication module.

The first communication module 101 may broadcast the packet including the communication connecting information with regard to the second communication method by using the first communication method. The first communication module 101 may receive the connection request with regard to the first communication method from the second device 200 that receives the packet. The first device 100 may establish the first communication link using the first communication method by responding to the connection request with regard to the first communication method.

The second communication module 102 may receive the connection request with regard to the second communication method from the second device 200. The second communication module 102 may establish the second communication link using the second communication method by responding to the connection request with regard to the second communication method.

In general, the control unit 120 controls overall operations of the first device 100. For example, the control unit 120 executes programs stored in the memory 170 so as to generally control the communication unit 110, the sensing unit 130, the output unit 140, the user input unit 150, the A/V input unit 160, etc.

The control unit 120 may include a sensor hub of a Seamless Sensing Platform (SSP). The sensor hub may be embodied as hardware or software, or by combination of the hardware and the software. For example, the sensor hub may include a Micro Controller Unit (MCU). The sensor hub according to the embodiment may be connected to the sensing unit 130, and may collect sensing information from the sensing unit 130.

The control unit 120 operates as the AP by using the second communication link, and may receive a request regarding the operation of the AP from the second device 200 via the first communication link.

The control unit 120 may receive the request for transmitting certain data from the second device 200 via the second communication link. The control unit 120 may receive the certain data from the external network 300 connected to the first device 100, and may transmit the received certain data to the second device 200 via the second communication link.

In a case where the request for transmitting the data is not transmitted by the second device 200 for a predetermined time, the control unit 120 may set the operation mode of the second communication module 102 supporting the second communication method as the sleep mode, and may terminate the connection of the second communication link. The control unit 120 may maintain the connection of the first communication link.

The control unit 120 may set the operation mode of the second communication module 102 supporting the second communication method as the sleep mode based on the sleep-mode request transmitted by the second device 200. The control unit 120 may terminate the connection of the second communication link, and may maintain the connection of the first communication link.

The control unit 120 may change the operation mode of the second communication module 102 supporting the second communication method from the sleep mode to the awake mode, and may reestablish the second communication link based on the awake-mode request transmitted by the second device 200 via the first communication link.

When an occurrence of an event (e.g., the event that the second device 200 exceeds the range of the first communication) that the first communication link is terminated is detected, the control unit 120 may change the operation mode of the second communication module 102 supporting the second communication method from the sleep mode to the awake mode, and may reestablish the second communication link.

As the first communication link whose connection is terminated is reestablished, the control unit 120 may change the operation mode of the second communication module 102 supporting the second communication method from the awake mode to the sleep mode, and may terminate the connection of the second communication link.

The control unit 120 may receive the setting information on the transmission of the push message from the second device 200. In a case where the push message is transmitted by the external network 300 in a state that the operation mode of the second communication module 102 is the sleep mode, the control unit 120 may determine whether to transmit the push message to the second device 200 based on the setting information on the transmission of the push message.

The control unit 120 may receive the data from the external network 300 connected to the first device 100 via the communication unit 110. The control unit 120 may select one communication link from among the communication links established between the first and second devices 100 and 200 based on the information on the amount of the received data. The control unit 120 may transmit the data to the second device 200 via the selected communication link.

The sensing unit 130 may detect a state of the first device 100, or a state around the first device 100, and may deliver the detected information to the control unit 120.

The sensing unit 130 may include at least one of a magnetic sensor 131, an acceleration sensor 132, a temperature/humidity sensor 133, an infrared sensor 134, a gyroscope sensor 135, a position sensor 136 (e.g., a Global Positioning System (GPS)), an atmospheric pressure sensor 137, a proximity sensor 138, and a Red-Green-Blue (RGB) sensor (illuminance sensor) 139, but is not limited thereto. Functions of each sensor may be directly inferred by one of ordinary skill in the art so that detailed descriptions will be omitted.

The output unit 140 is a unit for outputting an audio signal, a video signal, or a vibration signal, and may include a display unit 141, a sound output unit 142, a vibration motor 143, or the like.

The display unit 141 may display and output information processed in the first device 100. For example, the display unit 141 may display a User Interface (UI), or a Graphic User Interface (GUI) related to calls in a case where the display unit 141 is a call mode, or may display an alarm notifying a connection (or search) failure on the display in a case where a search for the second device 200 is failed. The display unit 141 may display information on a connection state with the second device 200 on the display. Also, the display unit 141 may provide a button for activating the low-power AP function on the set-up window 900.

When the display unit 141 and a touch pad form a layer structure and configure a touch screen, the display unit 141 may be used as not only an output device but also an input device. The display unit 141 may include at least one of a liquid crystal display, a thin film transistor-liquid crystal display, an organic light-emitting diode, a flexible display, a 3-Dimensional (3D) display, and an electrophoretic display. According to configuration types of the first device 100, the first device 100 may include two or more display units 141.

The sound output unit 142 may output audio data received from the communication unit 110, or stored in the memory 170. Also, the sound output unit 142 outputs sound signals related to functions (e.g., a sound of receiving a call signal, a sound of a message, etc.) performed in the first device 100. The sound output unit 142 may include a speaker, a buzzer, or the like.

The vibration motor 143 may output a vibration signal. For example, the vibration motor 143 may output a vibration signal corresponding to output of audio data or video data (e.g., a sound of receiving a call signal, a sound of a message, etc.). Also, the vibration motor 143 may output a vibration signal in a case where a touch is input to the touch screen.

The user input unit 150 represents a way that a user enters data for controlling the first device 100. For example, the user input unit 150 may include a key pad, a dome switch, a touch pad (e.g., a touch capacitive type touch pad, a pressure resistive type touch pad, an infrared beam sensing type touch pad, a surface acoustic wave type touch pad, an integral strain gauge type touch pad, a Piezo effect type touch pad, or the like), a jog wheel, a jog switch, or the like, but various embodiments of the present disclosure are not limited thereto.

The A/V input unit 160 is used for inputting an audio signal or a video signal, and may include a camera 161, and a microphone 162. The camera 161 may obtain image frames such as still images or moving pictures in a video call mode or in a shooting mode via an image sensor. The images captured by the image sensor may be processed by the control unit 120, or a separate image processing unit (not shown).

The image frames processed in the camera 161 may be stored in the memory 170, or transmitted to the outside through the communication unit 110. There may be two or more cameras 161 according a configuration type of a terminal.

External sound signals are input to the microphone 162, and processed as electric voice data. For example, the microphone 162 receives sound signals from an external device or a speaker. The microphone 162 may use various noise removal algorithms to remove various noises generated while the microphone 162 receives the sound signals from the outside.

The memory 170 may store programs for processing and control of the control unit 120, and data (the communication connection information with regard to the second communication method, etc.) to be input/output. The memory 170 may include at least one of memories such as a flash memory, a hard disk type memory, and a multimedia card micro type memory (e.g., a Secure Digital (SD) memory, an XD memory, etc.), a magnetic memory, a magnetic disk, and an optical disk. Also, the first device 100 may drive a web storage or a cloud server performing a storing function of the memory 170 on the Internet.

The programs stored in the memory 170 may be classified into a plurality of modules according to their functions, for example, into a UI module, a touch screen module, an alarm module, etc.

The UI module may provide a specialized UI, GUI, or the link that interoperates with the first device 100 for respective applications. The touch screen module may detect a touch gesture of a user performed on the touch screen, and may transmit information on the touch gesture to the control unit 120. The touch screen module according to the embodiment may identify a touch code, and analyze the identified touch code. The touch screen module may be formed of separate hardware in which a controller is included.

Various sensors may be arranged inside or near the touch screen in order to detect a touch or a proximate touch on the touch screen. A tactile sensor may be an example for detecting the touch of the touch screen. The tactile sensor is a sensor that detects a contact of a certain object at least as much as a person can detect. The tactile sensor may detect various types of information such as roughness of a contact surface, hardness of a contact object, temperature of a contact point, or the like.

Also, a proximity sensor may be an example of the sensors for detecting the touch of the touch screen.

The proximity sensor may be a sensor that detects whether there is an object approaching a predetermined detecting surface, or an object around the proximity sensor without power of an electromagnetic field or by using the infrared light without electrical contacts. The proximity sensor may be a transmission photosensor, a direct reflection type photosensor, a mirror reflection type photosensor, a high-frequency oscillation type proximity sensor, a capacitive proximity sensor, a magnetic proximity sensor, an infrared proximity sensor, etc. The touch gesture of the user may include a tap gesture, a touch & hold gesture, a double tap gesture, a drag gesture, a panning gesture, a flick gesture, a drag & drop gesture, or the like.

"Tapping" may be a user's motion of touching a screen by using a finger or a touch tool such as an electronic pen and then instantly lifting the finger or the touch tool from the screen without moving.

"Touching & holding" may be a user's motion of touching a screen by using a finger or a touch tool such as an electronic pen and then maintaining the above touching motion over a critical time (e.g., 2 seconds), after touching the screen. For example, a time difference between a touch-in time and a touch-out time is greater than or equal to the critical time, for example, 2 seconds. When a touch input lasts more than the critical time, in order to remind the user whether the touch input is tapping or touching & holding, a feedback signal may be provided in a visual, acoustic, or tactile manner. The critical time may vary according to various embodiments.

"Double tapping" may be a user's motion of touching the screen twice by using the finger or touch tool such as a stylus pen.

"Dragging" may be a user's motion of touching the screen by using the finger or touch tool and moving the finger or touch tool to another position on the screen while keeping the touching motion. The dragging motion may enable the moving or panning motion of an object.

"Panning" may be a user's motion of performing a dragging motion without selecting an object. Since no object is selected in the panning motion, no object is moved in a page but the page itself is moved on the screen or a group of objects may be moved within a page.

"Flicking" may be a user's motion of performing a dragging motion over a critical speed, for example, 100 pixel/s, by using the finger or touch tool. The dragging (panning) motion or the flicking motion may be distinguished based on whether the moving speed of the finger or touch tool is over the critical speed, for example, 100 pixel/s, or not.

"Dragging & Dropping" may be a user's motion of dragging an object to a predetermined position on the screen by using the finger or touch tool and then dropping the object at that position.

"Pinching" may be a user's motion of moving two fingers touching on the screen in opposite directions. The pinching motion is a gesture to magnify (open pinch) or contract (close pinch) an object or a page. A magnification value or a contraction value is determined according to the distance between the two fingers.

"Swiping" may be a user's motion of touching an object on the screen by using the finger or touch tool and simultaneously moving the object horizontally or vertically by a predetermined distance. A swiping motion in a diagonal direction may not be recognized as a swiping event.

The memory 170 may include a voice recognition module (not shown) that recognizes a voice of the user by using a voice recognition engine and transmits the recognized voice to the control unit 120.

The alarm module may generate a signal for notifying an occurrence of an event of the first device 100. The event that occurs in the first device 100 may be a call signal reception, a message reception, a key signal input, a schedule alarm, or the like. The alarm module may output the alarm signal as a video signal type via the display unit 141, as an audio signal type via the sound output unit 142, or as a vibration signal type via the vibration motor 143.

Various embodiments of the present disclosure may also be embodied as programmed commands to be executed in various computer means, and then may be recorded to a computer-readable recording medium. The computer-readable recording medium may include one or more of the programmed commands, data files, data structures, or the like. The programmed commands recorded on the computer-readable recording medium may be particularly designed or configured for various embodiments of the present disclosure or may be well known to one of ordinary skill in the art. Examples of the computer-readable recording medium include magnetic media including hard disks, magnetic tapes, and floppy disks, optical media including CD-ROMs and DVDs, magneto-optical media including optical disks, and a hardware apparatus designed to store and execute the programmed commands in ROM, RAM, a flash memory, and the like. Examples of the programmed commands include not only machine codes generated by a compiler but also codes to be executed in a computer by using an interpreter. The hardware apparatus may be configured to function as one or more software modules so as to perform operations of various embodiments of the present disclosure, or vice versa.

According to the various embodiments of the present disclosure, the first device 100 may broadcast the packet in which the communication connecting information is included as the BLE communication method so as to reduce the power consumption.

Also, according to the various embodiments of the present disclosure, in a case where the first device 100 finishes or stops operating as the AP, the first device 100 may terminate the connection of the second communication link in order to reduce the power consumption, and may maintain the first communication link as the control channel. Therefore, when the second communication link is required again (e.g., when the second device 200 requires to use the internet again), the first device 100 may quickly reestablish the second communication link by using the first communication link.

While the present disclosure has been shown and described with reference to various embodiments thereof, it will be understood by those skill in the art that various changes in form and details may be made therein without departing from the scope of the present disclosure as defined by the appended claims.

## Claims

1. A method of operating a device (100) as an Access Point, AP, the method comprising:
broadcasting a packet including communication connecting information with regard to a second communication method using a first communication method (S210);
establishing a first communication link using the first communication method after receiving a first connection request with regard to the first communication method from another device (200) receiving the packet ( S220);
establishing a second communication link using the second communication method after receiving a second connection request with regard to the second communication method from the other device (200), ( S230); and
operating the device (100) as the AP by using the second communication link (S240; S610);
**characterized in that** the method further comprises:
receiving a third request with regard to an operation of the device (100) as the AP from the other device (200) via the first communication link ( S625, S655);
receiving, from the other device (200), setting information on a transmission of a push message; and
when an operation mode of a communication module of the device (100) supporting the second communication method is set as a sleep mode ( S835), determining whether to transmit the push message via the second communication link which will be re-established to the other device based on the setting information (S850)
wherein the sleep mode corresponds to a state where the connection of the second communication link is terminated.

2. The method of claim 1, wherein the first communication method comprises a Bluetooth Low Energy, BLE, communication method, and the second communication method comprises at least one of a Wi-Fi communication method and a Bluetooth communication method.

3. The method of claim 1, wherein the operating of the device (100) as the AP by using the second communication link comprises:
receiving a request for transmitting certain data from the other device (200) via the second communication link (S620, S675);
receiving the certain data via an external network (300) connected to the device (100); and
transmitting the received certain data to the other device (200) via the second communication link.

4. The method of claim 1, wherein the third request with regard to the operation of the device (100) as the AP comprises:
a sleep-mode request for changing an operation mode of a communication module supporting the second communication method ( S625); or
an awake-mode request for changing the operation mode of the communication module supporting the second communication method ( S655).

5. The method of claim 1, further comprising:
setting an operation mode of a communication module supporting the second communication method as a sleep mode ( S640), and terminating a connection of the second communication link ( S645) when a request for transmitting data is not transmitted by the other device for a predetermined time (S635); and
maintaining a connection of the first communication link ( S645).

6. The method of claim 1, wherein the receiving of the third request with regard to the operation of the device (100) as the AP from the other device (200) comprises:
receiving a sleep-mode request from the other device (200) via the first communication link (S625);
setting an operation mode of a communication module supporting the second communication method as a sleep mode ( S640) based on the sleep-mode request ( S635), and terminating a connection of the second communication link (S645); and
maintaining a connection of the first communication link ( S645).

7. The method of claim 5, further comprising:
receiving an awake-mode request from the other device (200) via the first communication link S655); and
changing the operation mode of the communication module supporting the second communication method from the sleep mode to an awake mode based on the awake-mode request ( S660), and reestablishing the second communication link (S665).

8. The method of claim 5, further comprising:
detecting an occurrence of an event indicating that the connection of the first communication link is terminated (S1045); and
changing the operation mode of the communication module supporting the second communication method from the sleep mode to an awake mode (S1050) based on the event, and reestablishing the second communication link (S1055).

9. The method of claim 8, wherein the detecting of the occurrence of the event indicating that the connection of the first communication link is terminated comprises detecting that the other device (200) exceeds a communication coverage of the first communication method.

10. The method of claim 8, further comprising:
changing the operation mode of the communication module supporting the second communication method from the awake mode to the sleep mode (operation S1065), and terminating the connection of the second communication link as the first communication link whose connection is terminated is reestablished.

11. The method of claim 1, further comprising:
upon determining to transmit the push message to the other device (200), transmitting an alarm message to the other device (200) notifying an arrival of the push message via the first communication link;
receiving, from the other device (200), a push message request for transmitting the push message via the first communication link as a response to the alarm message;
reestablishing the second communication link, and
transmitting the push message to the other device (200) via the second communication link.

12. A device (100) that operates as an Access Point, AP, the device comprising:
a first communication module (101) configured to use a first communication method in order to broadcast a packet including communication connecting information with regard to a second communication method, to receive a first connection request with regard to a first communication link from another device (200) receiving the packet, and to establish the first communication link using the first communication method;
a second communication module (1023) configured to receive a second connection request with regard to the second communication method from the other device, and to establish a second communication link using the second communication method; and
a control unit (120) configured to control the second communication module (102) to ensure the device (100) operates as the AP by using the second communication link,
the device (100) **characterized in that** the control unit (120) is further configured to control the first communication module (101) to receive a third request with regard to the operation of the device (100) as the AP from the other device (200) via the first communication link, to receive, from the other device (200), setting information on a transmission of a push message, and, when an operation mode of a communication module supporting the second communication method is set as a sleep mode, to determine whether to transmit the push message via the second communication link which will be re-established to the other device based on the setting information, wherein the sleep mode corresponds to a state where the connection of the second communication link is terminated.

13. The device of claim 12, wherein the control unit (120) is further configured to:
set an operation mode of the second communication module (102) supporting the second communication method as a sleep mode when a request for transmitting data is not transmitted by the other device (200) for a predetermined time,
terminate a connection of the second communication link, and
maintain a connection of the first communication link.

14. The device of claim 12, wherein the control unit (120) is further configured to:
set an operation mode of the second communication module (102) supporting the second communication method as a sleep mode based on a sleep-mode request transmitted by the other device (200) via the first communication link,
terminate a connection of the second communication link, and
maintain a connection of the first communication link.

15. A computer-readable recording medium having recorded thereon a computer program comprising program commands for performing, when executed in a device, the method operations of any one of claims 1 to 11.

## Patentansprüche

1. Verfahren zum Betrieb eines Geräts (100) als einen Zugangspunkt, AP, wobei das Verfahren umfasst:
Senden eines Pakets einschließlich Kommunikationsverbindungsinformation in Bezug auf ein zweites Kommunikationsverfahren unter Verwendung des ersten Kommunikationsverfahrens (S210);
Herstellen einer ersten Kommunikationsverbindung unter Verwendung des ersten Kommunikationsverfahrens nach Empfangen einer ersten Verbindungsanforderung in Bezug auf das erste Kommunikationsverfahren von einem anderen Gerät (200), welches das Paket (S220) empfängt;
Herstellen einer zweiten Kommunikationsverbindung unter Verwendung des zweiten Kommunikationsverfahrens nach Empfangen einer zweiten Verbindungsanforderung in Bezug auf das zweite Kommunikationsverfahren vom anderen Gerät (200), (S230) und;
Betreiben des Geräts (100) als den Zugangspunkt (AP) durch Verwenden der zweiten Kommunikationsverbindung (S240; S610);
**dadurch gekennzeichnet, dass** das Verfahren ferner umfasst:
Empfangen einer dritten Anforderung in Bezug auf einen Betrieb des Geräts (100) als den Zugangspunkt (AP) ab dem anderen Gerät (200) über die erste Kommunikationsverbindung (S625, S655);
Empfangen, ab dem anderen Gerät (200), von Einstellinformation über eine Übertragung einer Push-Nachricht; und
wenn ein Betriebsmodus eines Kommunikationsmoduls des Geräts (100), welches das zweite Kommunikationsverfahren unterstützt, auf einen Schlafmodus (S835) eingestellt ist, Ermitteln, ob die Push-Nachricht über die zweite Kommunikationsverbindung gesendet werden soll, welche zu dem anderen Gerät auf der Einstellinformation (S850) basierend neu hergestellt werden wird,
wobei der Schlafmodus einem Zustand entspricht, wo die Verbindung der zweiten Kommunikationsverbindung beendet ist.

2. Verfahren nach Anspruch 1, wobei das erste Kommunikationsverfahren ein "Bluetooth Low Energy" (Niedrigenergie-Bluetooth-), BLE, Kommunikationsverfahren umfasst und das zweite Kommunikationsverfahren wenigstens eins eines Wi-Fi-Kommunikationsverfahrens und eines Bluetooth-Kommunikationsverfahrens umfasst.

3. Verfahren nach Anspruch 1, wobei der Betrieb des Geräts (100) als der Zugangspunkt (AP) durch Verwendung der zweiten Kommunikationsverbindung umfasst:
Empfangen einer Anforderung zum Senden gewisser Daten ab dem anderen Gerät (200) über die zweite Kommunikationsverbindung (S620, S675);
Empfangen gewisser Daten über ein externes Netzwerk (300), das mit dem Gerät (100) verbunden ist; und
Senden der empfangenen gewissen Daten an das andere Gerät (200) über die zweite Kommunikationsverbindung.

4. Verfahren nach Anspruch 1, wobei die dritte Anforderung in Bezug auf den Betrieb des Geräts (100) als den Zugangspunkt (AP) umfasst:
Eine Anforderung für Schlafmodus zur Änderung eines Betriebsmodus eines Kommunikationsmoduls, welches das zweite Kommunikationsverfahren (S625) unterstützt; oder
Eine Anforderung für Wachmodus zur Änderung des Betriebsmodus eines Kommunikationsmoduls, welches das zweite Kommunikationsverfahren (S655) unterstützt.

5. Verfahren nach Anspruch 1, ferner umfassend:
Einstellen eines Betriebsmodus eines Kommunikationsmoduls, welches das zweite Kommunikationserfahren unterstützt als einen Schlafmodus (S640) und Beenden einer Verbindung der zweiten Kommunikationsverbindung (S645), wenn eine Anforderung zum Senden von Daten nicht vom anderen Gerät für eine vorbestimmte Zeit (S635) gesendet wird; und
Beibehalten einer Verbindung der ersten Kommunikationsverbindung (S645).

6. Verfahren nach Anspruch 1, wobei das Empfangen der dritten Anforderung in Bezug auf den Betrieb des Geräts (100) als den Zugangspunkt (AP) ab dem anderen Gerät (200) umfasst:
Empfangen einer Anforderung für Schlafmodus ab dem anderen Gerät (200) über die erste Kommunikationsverbindung (S625);
Einstellen eines Betriebsmodus eines Kommunikationsmoduls, welches das zweite Kommunikationserfahren unterstützt als einen Schlafmodus (S640) auf der Anforderung (S635) für Schlafmodus basierend und Beenden einer Verbindung der zweiten Kommunikationsverbindung (S645); und
Beibehalten einer Verbindung der ersten Kommunikationsverbindung (S645).

7. Verfahren nach Anspruch 5, ferner umfassend:
Empfangen einer Anforderung für Wachmodus ab dem anderen Gerät (200) über die erste Kommunikationsverbindung (S655); und
Änderung des Betriebsmodus des Kommunikationsmoduls, welches das zweite Kommunikationsverfahren unterstützt, vom Schlafmodus in einen Wachmodus auf der Anforderung (S660) für Wachmodus basierend und Wiederherstellen der zweiten Kommunikationsverbindung (S665).

8. Verfahren nach Anspruch 5, ferner umfassend:
Detektieren eines Auftretens eines Ereignisses, das anzeigt, dass die Verbindung der ersten Kommunikationsverbindung (S1045) beendet ist; und
Änderung des Betriebsmodus des Kommunikationsmoduls, welches das zweite Kommunikationsverfahren unterstützt, vom Schlafmodus in einen Wachmodus (1050) auf dem Ereignis basierend und Wiederherstellen der zweiten Kommunikationsverbindung (S1055).

9. Verfahren nach Anspruch 8, wobei das Detektieren des Auftretens des Ereignisses, das anzeigt, dass die Verbindung der ersten Kommunikationsverbindung beendet ist, das Detektieren umfasst, dass das andere Gerät (200) eine Kommunikationsabdeckung des ersten Kommunikationsverfahrens überschreitet.

10. Verfahren nach Anspruch 8, ferner umfassend:
Änderung des Betriebsmodus des Kommunikationsmoduls, welches das zweite Kommunikationsverfahren unterstützt, vom Wachmodus in den Schlafmodus (Betrieb S1065) und Beenden der Verbindung der zweiten Kommunikationsverbindung sowie die erste Kommunikationsverbindung, deren Verbindung beendet ist, wiederhergestellt wird.

11. Verfahren nach Anspruch 1, ferner umfassend:
Nach Bestimmen die Push-Nachricht zum anderen Gerät (200) zu senden, Senden einer Alarmnachricht zum anderen Geräte (200), welche ein Eintreffen der Push-Nachricht über die erste Kommunikationsverbindung avisiert;
Empfangen ab dem anderen Gerät (200), einer Anforderung für Push-Nachricht zum Senden der Push-Nachricht über die erste Kommunikationsverbindung als eine Antwort auf die Alarmnachricht;
Wiederherstellen der zweiten Kommunikationsverbindung, und
Senden der Push-Nachricht an das andere Gerät (200) über die zweite Kommunikationsverbindung.

12. Gerät (100), das als ein Zugangspunkt (AP) arbeitet, wobei das Gerät umfasst:
Ein erstes Kommunikationsmodul (101), das konfiguriert ist ein erstes Kommunikationsverfahren zu verwenden, um ein Paket zu senden, das Kommunikationsverbindungsinformation in Bezug auf ein zweites Kommunikationsverfahren einschließt, um eine erste Verbindungsanforderung in Bezug auf eine erste Kommunikationsverbindung von einem anderen Gerät (200) zu empfangen, welches das Paket empfängt und die erste Kommunikationsverbindung unter Verwendung des ersten Kommunikationsverfahrens herzustellen;
ein zweites Kommunikationsmodul (1023), das konfiguriert ist, eine zweite Verbindungsanforderung in Bezug auf das zweite Kommunikationsverfahren ab dem anderen Gerät zu empfangen und eine zweite Kommunikationsverbindung unter Verwendung des zweiten Kommunikationsverfahrens herzustellen; und
eine Steuereinheit (120), die konfiguriert ist, das zweite Kommunikationsmodul (102) zu steuern, um sicherzustellen, dass das Gerät (100) als der Zugangspunkt (AP) durch Verwendung der zweiten Kommunikationsverbindung arbeitet,
das Gerät (100) **dadurch gekennzeichnet, dass** die Steuereinheit (120) ferner konfiguriert ist, das erste Kommunikationsmodul (101) zu steuern, um eine dritte Anforderung in Bezug auf den Betrieb des Geräts (100) als den Zugangspunkt (AP) ab dem anderen Gerät (200) über die erste Kommunikationsverbindung zu empfangen, um, ab dem anderen Gerät (200), Einstellinformation über eine Übertragung einer Push-Nachricht zu empfangen, und, wenn ein Betriebsmodus eines Kommunikationsmoduls, welches das zweite Kommunikationsverfahren unterstützt, als ein Schlafmodus eingestellt ist, zu ermitteln, ob die Push-Nachricht über die zweite Kommunikationsverbindung gesendet werden soll, welche zum anderen Gerät auf der Einstellinformation basierend wieder hergestellt werden wird, wobei der Schlafmodus einem Zustand entspricht, wo die Verbindung der zweiten Kommunikationsverbindung beendet ist.

13. Gerät nach Anspruch 12, wobei die Steuereinheit (120) ferner konfiguriert ist, Folgendes zu tun:
Einstellen eines Betriebsmodus des zweiten Kommunikationsmoduls (102), welches das zweite Kommunikationsverfahren unterstützt, als einen Schlafmodus, wenn eine Anforderung zum Senden von Daten nicht vom anderen Gerät (200) für eine vorbestimmte Zeit gesendet wird,
Beenden einer Verbindung der zweiten Kommunikationsverbindung, und
Beibehalten einer Verbindung der ersten Kommunikationsverbindung.

14. Gerät nach Anspruch 12, wobei die Steuereinheit (120) ferner konfiguriert ist, Folgendes zu tun:
Einstellen eines Betriebsmodus des zweiten Kommunikationsmoduls (102), welches das zweite Kommunikationsverfahren unterstützt, als einen Schlafmodus auf einer Anforderung für Schlafmodus basierend, die vom anderen Gerät (200) über die erste Kommunikationsverbindung gesendet wurde,
Beenden einer Verbindung der zweiten Kommunikationsverbindung, und
Beibehalten einer Verbindung der ersten Kommunikationsverbindung.

15. Computerlesbares Aufzeichnungsmedium, auf dem ein Computerprogramm aufgezeichnet ist, das Programmbefehle zur Durchführung, wenn in einem Gerät ausgeführt, der Verfahrensoperationen eines der Ansprüche 1 bis 11 umfasst.

## Revendications

1. Un procédé de fonctionnement d'un dispositif (100) en tant que point d'accès, AP, le procédé comprenant :
la diffusion d'un paquet contenant des informations de connexion de communication relatives à un deuxième procédé de communication au moyen d'un premier procédé de communication (S210),
l'établissement d'une première liaison de communication au moyen du premier procédé de communication après la réception d'une première demande de connexion relative au premier procédé de communication à partir d'un autre dispositif (200) recevant le paquet (S220),
l'établissement d'une deuxième liaison de communication au moyen du deuxième procédé de communication après la réception d'une deuxième demande de connexion relative au deuxième procédé de communication à partir de l'autre dispositif (200), (S230), et
le fonctionnement du dispositif (100) en tant qu'AP au moyen de la deuxième liaison de communication (S240, S610),
**caractérisé en ce que** le procédé comprend en outre :
la réception d'une troisième demande relative à un fonctionnement du dispositif (100) en tant qu'AP à partir de l'autre dispositif (200) par l'intermédiaire de la première liaison de communication (S625, S655),
la réception, à partir de l'autre dispositif (200), d'informations de réglage par une transmission d'un message de poussée, et
lorsqu'un mode de fonctionnement d'un module de communication du dispositif (100) qui prend en charge le deuxième procédé de communication est réglé sur un mode sommeil (S835), la détermination s'il convient de transmettre le message de poussée par l'intermédiaire de la deuxième liaison de communication qui sera rétablie vers l'autre dispositif en fonction des informations de réglage (S850)
où le mode sommeil correspond à un état dans lequel la connexion de la deuxième liaison de communication est terminée.

2. Le procédé selon la Revendication 1, où le premier procédé de communication comprend un procédé de communication à faible énergie Bluetooth, BLE, et le deuxième procédé de communication comprend au moins un procédé parmi un procédé de communication Wi-Fi et un procédé de communication Bluetooth.

3. Le procédé selon la Revendication 1, où le fonctionnement du dispositif (100) en tant qu'AP au moyen de la deuxième liaison de communication comprend :
la réception d'une demande relative à la transmission de certaines données à partir de l'autre dispositif (200) par l'intermédiaire de la deuxième liaison de communication (S620, S675),
la réception des certaines données par l'intermédiaire d'un réseau externe (300) raccordé au dispositif (100), et
la transmission des certaines données reçues à l'autre dispositif (200) par l'intermédiaire de la deuxième liaison de communication.

4. Le procédé selon la Revendication 1, où la troisième demande relative au fonctionnement du dispositif (100) en tant qu'AP comprend :
une demande de mode sommeil destinée à la modification d'un mode de fonctionnement d'un module de communication qui prend en charge le deuxième procédé de communication (S625), ou
une demande de mode éveil destinée à la modification du mode de fonctionnement du module de communication qui prend en charge le deuxième procédé de communication (S655).

5. Le procédé selon la Revendication 1, comprenant en outre :
la définition d'un mode de fonctionnement d'un module de communication qui prend en charge le deuxième procédé de communication en tant que mode sommeil (S640), et la terminaison d'une connexion de la deuxième liaison de communication (S645) lorsqu'une demande relative à la transmission de données n'est pas transmise par l'autre dispositif pendant une durée prédéterminée (S635), et
le maintien d'une connexion de la première liaison de communication (S645).

6. Le procédé selon la Revendication 1, où la réception de la troisième demande relative au fonctionnement du dispositif (100) en tant qu'AP à partir de l'autre dispositif (200) comprend :
la réception d'une demande de mode sommeil à partir de l'autre dispositif (200) par l'intermédiaire de la première liaison de communication (S625),
la définition d'un mode de fonctionnement d'un module de communication qui prend en charge le deuxième procédé de communication en tant que mode sommeil (S640) en fonction de la demande de mode sommeil (S635), et la terminaison d'une connexion de la deuxième liaison de communication (S645), et
le maintien d'une connexion de la première liaison de communication (S645).

7. Le procédé selon la Revendication 5, comprenant en outre :
la réception d'une demande de mode éveil à partir de l'autre dispositif (200) par l'intermédiaire de la première liaison de communication (S655), et
la modification du mode de fonctionnement du module de communication qui prend en charge le deuxième procédé de communication du mode sommeil vers un mode éveil en fonction de la demande de mode éveil (S660), et le rétablissement de la deuxième liaison de communication (S665).

8. Le procédé selon la Revendication 5, comprenant en outre :
la détection d'une occurrence d'un événement indiquant que la connexion de la première liaison de communication est terminée (S 1045), et
la modification du mode de fonctionnement du module de communication qui prend en charge le deuxième procédé de communication du mode sommeil vers un mode éveil (S 1050) en fonction de l'événement, et le rétablissement de la deuxième liaison de communication (S 1055).

9. Le procédé selon la Revendication 8, où la détection de l'occurrence de l'événement indiquant que la connexion de la première liaison de communication est terminée comprend la détection que l'autre dispositif (200) dépasse une couverture de communication du premier procédé de communication.

10. Le procédé selon la Revendication 8, comprenant en outre :
la modification du mode de fonctionnement du module de communication qui prend en charge le deuxième procédé de communication du mode éveil vers le mode sommeil (S 1065), et la terminaison de la connexion de la deuxième liaison de communication en tant que première liaison de communication dont la connexion est terminée est rétablie.

11. Le procédé selon la Revendication 1, comprenant en outre :
après la détermination de transmettre le message de poussée à l'autre dispositif (200), la transmission d'un message d'alarme à l'autre dispositif (200) signalant une arrivée du message de poussée par l'intermédiaire de la première liaison de communication,
la réception, à partir de l'autre dispositif (200), d'une demande de message de poussée relative à la transmission du message de poussée par l'intermédiaire de la première liaison de communication en tant que réponse au message d'alarme,
le rétablissement de la deuxième liaison de communication, et
la transmission du message de poussée à l'autre dispositif (200) par l'intermédiaire de la deuxième liaison de communication.

12. Un dispositif (100) qui fonctionne en tant que point d'accès, AP, le dispositif comprenant :
un premier module de communication (101) configuré de façon à utiliser un premier procédé de communication afin de diffuser un paquet contenant des informations de connexion de communication relatives à un deuxième procédé de communication, de façon à recevoir une première demande de connexion relative à une première liaison de communication à partir d'un autre dispositif (200) recevant le paquet et à établir la première liaison de communication au moyen du premier procédé de communication,
un deuxième module de communication (1023) configuré de façon à recevoir une deuxième demande de connexion relative au deuxième procédé de communication à partir de l'autre dispositif et à établir une deuxième liaison de communication au moyen du deuxième procédé de communication, et
une unité de commande (120) configurée de façon à commander le deuxième module de communication (102) de façon à garantir que le dispositif (100) fonctionne en tant qu'AP au moyen de la deuxième liaison de communication,
le dispositif (100) étant **caractérisé en ce que** l'unité de commande (120) est configurée en outre de façon à commander le premier module de communication (101) de façon à recevoir une troisième demande relative au fonctionnement du dispositif (100) en tant qu'AP à partir de l'autre dispositif (200) par l'intermédiaire de la première liaison de communication, à recevoir, à partir de l'autre dispositif (200), des informations de réglage par une transmission d'un message de poussée, et, lorsqu'un mode de fonctionnement d'un module de communication qui prend en charge le deuxième procédé de communication est réglé sur un mode sommeil, de façon à déterminer s'il convient de transmettre le message de poussée par l'intermédiaire de la deuxième liaison de communication qui sera rétablie vers l'autre dispositif en fonction des informations de réglage, où le mode sommeil correspond à un état dans lequel la connexion de la deuxième liaison de communication est terminée.

13. Le dispositif selon la Revendication 12, où l'unité de commande (120) est configurée en outre de façon à :
définir un mode de fonctionnement du deuxième module de communication (102) qui prend en charge le deuxième procédé de communication en tant que mode sommeil lorsqu'une demande relative à la transmission de données n'est pas transmise par l'autre dispositif (200) pendant une durée prédéterminée,
terminer une connexion de la deuxième liaison de communication, et
maintenir une connexion de la première liaison de communication.

14. Le dispositif selon la Revendication 12, où l'unité de commande (120) est configurée en outre de façon à :
définir un mode de fonctionnement du deuxième module de communication (102) qui prend en charge le deuxième procédé de communication en tant que mode sommeil en fonction d'une demande de mode sommeil transmise par l'autre dispositif (200) par l'intermédiaire de la première liaison de communication,
terminer une connexion de la deuxième liaison de communication, et
maintenir une connexion de la première liaison de communication.

15. Un support d'enregistrement lisible par ordinateur possédant enregistré sur celui-ci un programme informatique contenant des commandes de programme destinées à l'exécution, lorsqu'elles sont exécutées dans un dispositif, des opérations de procédé selon l'une quelconque des Revendications 1 à 11.
